# EUROPÄISCHE PATENTSCHRIFT

(11) **EP 1 514 755 B1**
(45) Veröffentlichungstag und Bekanntmachung des Hinweises auf die Patenterteilung: **23.01.2008**
(21) Anmeldenummer: 04017797.4
(22) Anmeldetag: 28.07.2004
(51) Int. Cl.: B60T 8/50, B60T 8/36, B60T 13/68

(54) **Verfahren zur Steuerung des Eingangsdrucks eines ABS-Regelventils**
Method of controlling the inlet pressure of an anti-lock brake control valve
Procédé de commande de la pression d'entrée d'une valve de commande d'un système de freinage à anti-blocage

(30) Priorität: 11.09.2003 DE 10341932
(43) Veröffentlichungstag der Anmeldung: 16.03.2005
(73) Patentinhaber: WABCO GmbH, 30453 Hannover (DE)
(72) Erfinder: Breipohl, Hans-Jörg, 30926 Seelze (DE); Pannbacker, Helmut, 30966 Hemmingen (DE); Stanusch, Gerald, 31177 Harsun (DE); Wolff, Hans-Klaus, 31832 Springe (DE)
(74) Vertreter: Günther, Constantin

(56) Entgegenhaltungen:
- DE-A- 2 005 631
- DE-A- 3 330 686
- DE-A- 19 527 419
- DE-A- 19 713 920

## Beschreibung

Die Erfindung betrifft ein Verfahren zur Steuerung des Eingangsdrucks eines ABS-Regelventils bei einer Druckmittelbremsanlage gemäß dem Oberbegriff des Patentanspruchs 1.

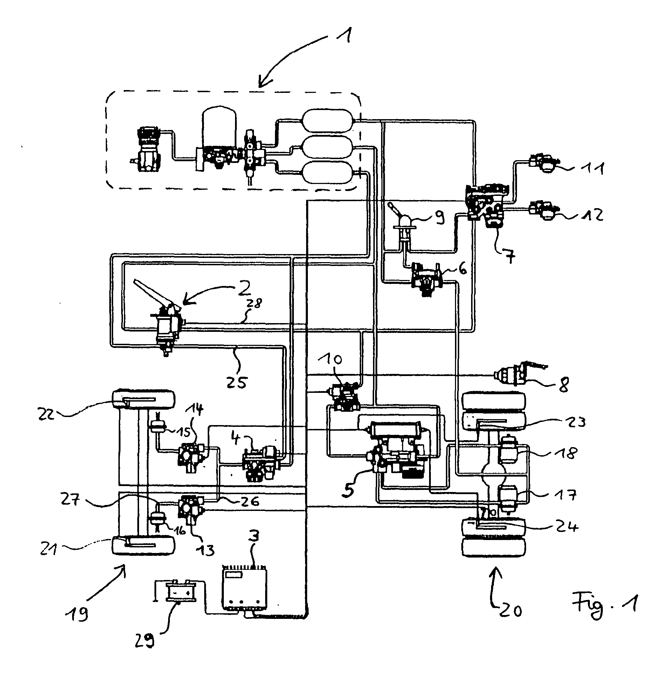

Der Aufbau einer gattungsgemäßen Druckmittelbremsanlage ist in Fig. 1 dargestellt.

Die bekannte Druckmittelbremsanlage ist als elektronisch gesteuertes Bremssystem (EBS) ausgebildet, in das ein Antiblockiersystem (ABS) integriert ist. Bei dieser Druckmittelbremsanlage kann vom Fahrer mittels eines Bremspedals ein Bremsdruck angefordert werden, welcher mittels elektronischer Steuerung über ein Drucksteuerventil ausgehend von einem Vorratsdruck eingestellt wird. Dieser von dem Drucksteuerventil eingestellte Druck wird über ABS-Regelventile, die den jeweiligen Rädern des Fahrzeuges zugeordnet sind, an die ebenfalls den Rädern des Fahrzeuges zugeordneten einzelnen Bremszylinder weitergegeben. Im Falle einer Blockiertendenz einzelner oder aller Räder wird von dem Antiblockiersystem eine ABS-Regelung durchgeführt, in deren Rahmen das Antiblockiersystem die ABS-Regelventile derart ansteuert, daß der Druck in den Bremszylindern gegenüber der Fahreranforderung verringert bzw. auf einem vorgegebenen Niveau gehalten wird, um ein Blockieren der Räder zu verhindern.

Wie hieraus erkennbar ist, wird der an den ABS-Regelventilen eingangsseitig anstehende Druck durch die Stärke der Bremspedalbetätigung durch den Fahrer beeinflußt. Es hat sich gezeigt, daß sich dieser Fahrereinfluß negativ auf die Qualität der ABS-Regelung und den Luftverbrauch auswirken kann, je nachdem, wie stark der Fahrer das Bremspedal betätigt und in welcher Höhe Vorratsdruck zur Verfügung steht.

Aus der DE 197 13 920 A1 ist ein Verfahren zur Abbremsung eines Fahrzeugs bekannt, welches dazu dient, einen unerwünschten Einfluß der dynamischen Achslastverlagerung bei der Abbremsung des Fahrzeuges auf die Beherrschbarkeit des Fahrzeuges zu vermeiden, insbesondere bei Fahrzeugen mit kurzem Radstand und geringer Hinterachs-Last. Bei dem bekannten Verfahren wird im Falle eines Blockierschutzbetriebes an der Hinterachse auf einen niedrigen Hinterachsbremsdruck-Niveau der Vorderachsbremsdruck auf einen vorbestimmten Vorderachs-Grenzdruck begrenzt. Das bekannte Verfahren erfordert somit immer eine Berücksichtigung des Hinterachsbremsdrucks, um den Vorderachsbremsdruck zu begrenzen.

Der Erfindung liegt daher die Aufgabe zugrunde, ein Verfahren zur Steuerung des Eingangsdrucks eines ABS-Regelventils bei einer Druckmittelbremsanlage anzugeben, welches zu einer Vergleichmäßigung der Qualität der ABS-Regelung bei verschiedenen von dem Fahrer vorgebbaren Bremsdruckwerten führt.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Unter einem Antiblockiersystem wird nachfolgend ein System verstanden, welches zumindest eine Steuereinheit zum Ausführen einer ABS-Regelung, wenigstens einen Sensor zur Ermittlung einer Raddrehgeschwindigkeit sowie wenigstens ein ABS-Regelventil aufweist. Die Steuereinheit kann auch, wie im nachfolgenden Ausführungsbeispiel näher erläutert, Bestandteil eines elektronischen Steuergerätes sein, welches zusätzlich weitere Funktionen ausführt. Als ABS-Regelung wird ein Zustand verstanden, in welchem die Steuereinheit ABS-Regeleingriffe zur Blockiervermeidung an wenigstens einem Rad durchführt.

Die Erfindung hat den Vorteil, mit den in derzeitigen Druckmitelbremsanlagen ohnehin vorhandenen Komponenten auszukommen. Die Erfindung erfordert somit lediglich eine Erweiterung der Steuer- und Regelalgorithmen des Antiblockiersystems bzw. der elektronischen Steuerung der Bremsanlage. Bezüglich der Bremsanlage ist lediglich eine den ABS-Regelventilen vorgeschaltete Einrichtung erforderlich, mit der der Eingangsdruck der ABS-Regelventile beeinflußbar ist. In der Druckmittelbremsanlage gemäß Fig. 1 kann hierfür beispielsweise das Druckregelventil (4) dienen. Weitere Ausgestaltungen sind in den nachfolgend erläuterten Ausführungsbeispielen genannt.

Ein weiterer Vorteil der Erfindung besteht darin, daß der Luftverbrauch bei einer ABS-Regelung gesenkt werden kann, da ohne unnötig hohe Druckunterschiede zwischen dem Eingangsdruck des ABS-Regelventils und dem von diesem Ventil abgegebenem Ausgangsdruck vermieden werden können. Ein weiterer Vorteil besteht darin, daß die Fahrstabilität und Steuerbarkeit des Fahrzeuges verbessert wird.

Unter Nennung weiterer Vorteile wird die Erfindung nachfolgend anhand von Ausführungsbeispielen unter Verwendung von Zeichnungen näher erläutert.

Es zeigen
- Fig. 1: eine Druckmittelbremsanlage in schematischer Darstellung und
- Fig. 2: ein Ausführungsbeispiel des erfindungsgemäßen Verfahrens in Form von Zeitdiagrammen.

In der Fig. 1 ist eine Druckmittelbremsanlage mit elektronischer Steuerung dargestellt, ausgestaltet als Druckluftbremsanlage, welche in einem Fahrzeug mit einer Vorderachse (19) und einer Hinterachse (20) angeordnet ist. Darin werden für Druckluftleitungen doppelte Linien und für elektrische Leitungen einfache Linien verwendet.

Die Druckluftbremsanlage gemäß Fig. 1 weist eine Drucklufterzeugungs- und Vorratseinrichtung (1) auf, welche beispielsweise einen Kompressor, einen Lufttrockner, einen Druckregler sowie verschiedene Druckluftvorratsbehälter enthält. Zur Erfassung einer Bremsanforderung durch den Fahrer des Fahrzeuges ist ein mit einem Bremspedal versehener Bremswertgeber (2) vorgesehen, welcher ein die Bremsanforderung repräsentierendes elektrisches Bremswertsignal sowie aus Redundanzgründen einen pneumatischen Bremsdruck abgibt. Das Bremswertsignal wird über eine elektrische Leitung (28) einem elektronischen Steuergerät (3) zugeführt, welches von einer elektrischen Energiequelle (29) mit elektrischer Energie versorgt wird. Der pneumatische Bremsdruck des Bremswertgebers (2) wird über eine pneumatische Leitung (25) zu einem Drucksteuerventil (4) geführt. An das Drucksteuerventil (4) ist über eine weitere pneumatische Leitung außerdem einer der Druckluftvorratsbehälter der Drucklufterzeugungs- und Vorratseinrichtung (1) angeschlossen. Im störungsfreien Normalfall wird für alle Bremsfunktionen der von dem Druckluftvorratsbehälter an dem Drucksteuerventil (4) anstehende Druck für alle Bremsfunktionen verwendet. Lediglich bei einer Störung der Bremsanlage, z.B. der elektronischen Steuerung, wird auf den über die pneumatische Leitung (25) zu dem Drucksteuerventil (4) geführten Druck zurückgegriffen.

Ausgangsseitig des Drucksteuerventils (4) sind über Druckluftleitungen (26) ABS-Regelventils (13, 14) angeschlossen. Die ABS-Regelventile (13, 14) sind als elektrisch steuerbare Magnetregelventile mit den Funktionen "Druck halten", "Druck abbauen" und "Druck einsteuern", d. h. Druck erhöhen, ausgebildet. Ausgangsseitig der ABS-Regelventile (13, 14) sind jeweils Druckluftbremszylinder (15, 16) bekannter Bauart angeordnet, welche zur Betätigung des jeweiligen Radbremsen der Räder der Vorderachse (19) dienen.

Des weiteren empfängt das elektronische Steuergerät (3) über elektrische Leitungen Signale von Drehgeschwindigkeitssensoren (21, 22), mit denen die jeweiligen Drehgeschwindigkeiten der einzelnen Räder der Vorderachse (19) ermittelbar sind. Hierüber ermittelt das elektronische Steuergerät (3), das zugleich als Steuereinheit zum Ausführen der ABS-Regelung dient, beispielsweise eine Blockiergefahr der Räder der Vorderachse (19) bzw. schätzt aus diesen Signalen weitere Größen ab wie etwa den vorliegenden Reibwert zwischen Reifen und Fahrbahn.

Das elektronische Steuergerät (3) empfängt von dem Bremswertgeber (2) das über die elektrische Leitung (28) abgegebene Bremswertsignal und berechnet nach vorgegebenen Algorithmen hieraus elektrische Steuersignale für das Drucksteuerventil (4) und die ABS-Regelventile (13, 14). Hierbei wird der Bremsdruck in den Bremszylindern (15, 16) einerseits derart gesteuert, daß die vom Fahrer durch die Bremspedalbetätigung angeforderte Bremswirkung erreicht wird, andererseits aber ein Blokkieren der Räder der Vorderachse (19) vermieden wird.

Für die Vermeidung des Blockierens weist das elektronische Steuergerät (3) entsprechende Algorithmen zur ABS-Regelung auf.

Die zuvor für die Vorderachse (19) beschriebenen Komponenten elektronisches Steuergerät (3), Drucksteuerventil (4) sowie ABS-Regelventile (13, 14) sind bezüglich der Hinterachse (20) in einem Hinterachssteuermodul (5) angeordnet. An dieses sind analog zu der Vorderachse (19) ebenfalls Bremszylinder (17, 18) sowie Drehgeschwindigkeitssensoren (23, 24) angeschlossen.

Weitere in der Druckluftbremsanlage gemäß Fig. 1 vorgesehene Komponenten sind ein ebenfalls aus Redundanzgründen vorgesehenes Ventil (10), ein Feststellbremssignalgeber (9) sowie ein damit verbundenes Feststellbremsventil (6), ein Anhängersteuerventil (7) mit daran angeschlossenen Pneumatik-Kupplungselementen (11, 12) zum Ankoppeln der Bremsanlage eines Anhängefahrzeuges, sowie eine elektrische Steckverbindung (8) zur Ankopplung elektrischer Komponenten eines Anhängefahrzeuges.

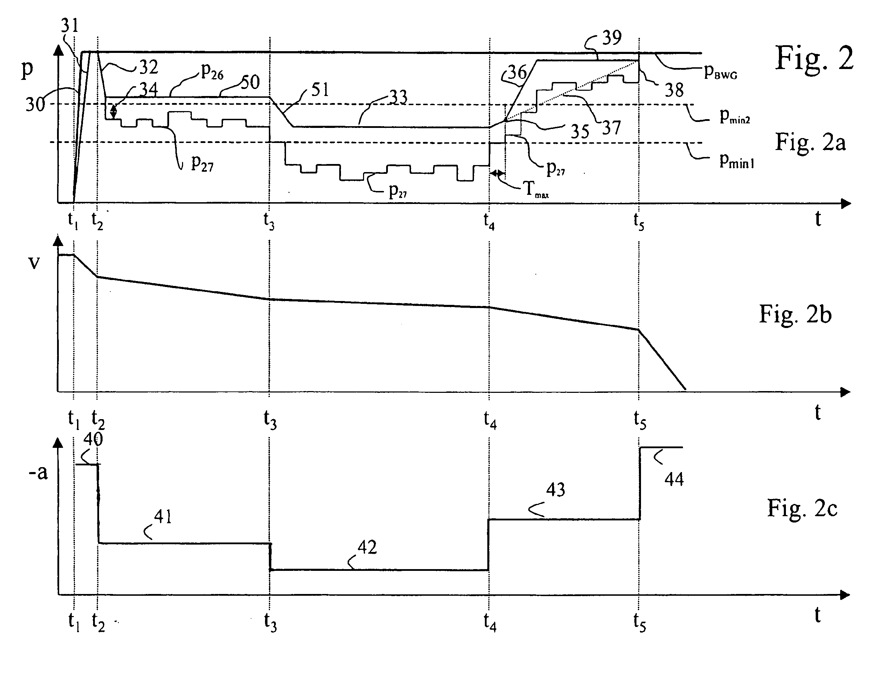

In der Fig. 2 wird ein Ausführungsbeispiel der Erfindung anhand des Bremskreises der Vorderachse (19) näher erläutert. Die Erläuterungen gelten in analoger Weise für den Bremskreis der Hinterachse (20). Zwecks einfacher Vergleichbarkeit werden in der Fig. 2a die Druckniveaus in den Druckluftleitungen (26, 27) sowie ein aus dem Bremswertsignal berechneter Soll-Bremsdruck (P_{BWS}) in demselben Zeitdiagramm dargestellt. Das erfindungsgemäße Verfahren ist auch in einer Bremsanlage anwendbar, bei der statt eines Bremswertgebers mit elektrischem Bremswertsignal ein konventionelles Fußbremsventil eingesetzt wird, das direkt den Soll-Bremsdruck abgibt. Für einen solchen Fall ist der direkt abgegebene Soll-Bremsdruck in der Fig. 2a für den aus dem Bremswertsignal berechneten Soll-Bremsdruck (P_{BWS}) einzusetzen.

Erfindungsgemäß wird der Eingangsdruck (P₂₆) der ABS-Regelventile (13, 14) auf kleinere Druckwerte als von dem Fahrer durch die Bremspedalbetätigung bewirkte Druckwerte, d. h. den Soll-Bremsdruck (P_{BWS}), eingestellt. Diese Einstellung wird automatisch von dem elektronischen Steuergerät (3) vorgenommen, wenn diese anhand der Drehgeschwindigkeitssignale der Drehgeschwindigkeitssensoren (21, 22) feststellt, daß eine Blockierneigung der Vorderräder vorliegt und daraufhin eine ABS-Regelung auslöst. Im Gegensatz zu dem Eingangs genannten Stand der Technik kann hier also eine Begrenzung des Eingangsdrucks der ABS-Regelventile an derjenigen Fahrzeugachse vorgenommen werden, an welcher auch eine ABS-Regelung stattfindet.

Gemäß einer vorteilhaften Ausgestaltung der Erfindung kann dabei der Eingangsdruck (P₂₆) bei einer ABS-Regelung in Abhängigkeit von während des Abbremsvorgangs ermittelten Größen einstellbar sein. Als solche während des Abbremsvorgangs ermittelte Größen kommen insbesondere die Fahrzeugverzögerung und/oder der Reibwert zwischen Reifen und Fahrbahn in Frage. Da der wirklich vorliegende Reibwert in der Praxis schwer ermittelbar ist, kommen hierfür gemäß einer vorteilhaften Ausgestaltung der Erfindung Verfahren in Betracht, mit denen der Reibwert aufgrund anderer Größen wenigstens näherungsweise ermittelbar ist, z. B. aufgrund der Fahrzeugverzögerung, des jeweiligen Bremsschlupfs an den Rädern sowie der Geschwindigkeit des Fahrzeuges.

Gemäß einer weiteren vorteilhaften Weiterbildung der Erfindung kann der Eingangsdruck (P₂₆) in Abhängigkeit von Fahrzeugkenngrößen einstellbar sein. Als solche Fahrzeugkenngrößen kommen beispielsweise die Beladung bzw. das Fahrzeuggewicht in Betracht, außerdem z. B. die Art der Bremsen (Scheibenbremse, Trommelbremse) sowie weitere Bremskenngrößen. Hierdurch kann beispielsweise einem unterschiedlich hohen Bedarf an Eingangsdruck zwischen beladenem und unbeladenem Fahrzeug-Zustand Rechnung getragen werden. Ein beladenes Fahrzeug erfordert in der Regel einen höheren Bremsdruck zur Erreichung einer gewünschten Abbremsung als ein unbeladenes Fahrzeug, demzufolge besteht auch ein Bedarf an höherem Eingangsdruck der ABS-Regelventile.

In der Fig. 2 sind als Zeitdiagramme jeweils die Druckverläufe der Druckniveaus (P_{BWS}, P₂₆, P₂₇) dargestellt (Fig. 2a), die Fahrzeuggeschwindigkeit (v) (Fig. 2b) sowie die Fahrzeugverzögerung (-a) (Fig. 2c), d. h. die negative Beschleunigung (a).

Von dem Zeitpunkt t = 0 an fährt das Fahrzeug zunächst mit einer konstanten Geschwindigkeit. Zu einem Zeitpunkt (t₁) wird das Fahrzeug infolge einer Betätigung des Bremspedals abgebremst. Es sei angenommen, daß der Fahrer das Bremspedal voll betätigt, z. B. weil eine Gefahrensituation vorliegt. Von dem Zeitpunkt (t₁) an steigt der Soll-Bremsdruck (P_{BWS}) mit einem vorgegebenen Gradienten gemäß der Linie (30) auf einen Maximalwert an. Die Druckniveaus (P₂₆, P₂₇) steigen mit einem weiteren vorgegebenen Gradienten gemäß der Linie (31) an. Das Fahrzeug verzögert nun, wie in der Fig. 2c durch das Verzögerungsniveau (40) dargestellt. Die Fahrzeuggeschwindigkeit (v) verringert sich entsprechend.

Zu einem Zeitpunkt (t₂) wird von dem elektronischen Steuergerät (3) durch Auswertung der Signale der Drehgeschwindigkeitssensoren (21, 22) eine Blockierneigung an den Rädern der Vorderachse (19) festgestellt, z. B. infolge einer Verringerung des Reibwertes zwischen den Reifen des Fahrzeuges und der Fahrbahn. Das elektronische Steuergerät (3) bewirkt sodann eine Verringerung des in den Bremszylindern (15, 16) vorliegenden Druckniveaus (P₂₇) gemäß der Linie (32). Etwa zeitgleich wird durch entsprechende Ansteuerung des Drucksteuerventils (4) der Eingangsdruck (P₂₆) der ABS-Regelventile (13, 14) auf das in der Fig. 2a dargestellte Druckniveau (50) bewirkt. Gemäß einer vorteilhaften Ausgestaltung der Erfindung wird für die Bestimmung des Druckniveaus (50) der in einem ausgangsseitig des ABS-Regelventils (13, 14) angeschlossenen Bremszylinder (15, 16) vorliegende Bremsdruck (P₂₇) zu dem Zeitpunkt verwendet, zu dem eine ABS-Regelung begonnen wird. Wie auch aus Fig. 2a ersichtlich ist, wird nach Erkennung der Blockiertendenz zum Zeitpunkt (t₂) eine ABS-Regelung begonnen. Das zu diesem Zeitpunkt (t₂) zunächst eingestellte Druckniveau (P₂₇) wird für die Festlegung des Druckniveaus (50) verwendet, derart, daß das Druckniveau (50) oberhalb des Druckniveaus (P₂₇) zum Zeitpunkt des Erkennens der Blockiertendenz liegt. Gemäß einer vorteilhaften Weiterbildung der Erfindung wird das Druckniveau (50) um eine vorbestimmte Differenz (34) höher festgelegt als das zunächst eingestellte Druckniveau (P₂₇). Diese vorbestimmte Differenz (34) kann beispielsweise in dem elektronischen Steuergerät (3) eingespeichert sein.

Nach dem Zeitpunkt (t₂) bis zu dem Zeitpunkt (t₃) wird das Fahrzeug auf im wesentlichen gleichbleibenden Reibwert abgebremst, wobei das Druckniveau (P₂₇) gemäß vorgegebenen Algorithmen zum Blockierschutz über die ABS-Regelventile (13, 14) im geringen Umfang variiert wird. In diesem Zeitraum (t₂, t₃) stellt sich eine Fahrzeugverzögerung (-a) auf dem durch die Linie (41) dargestellten, im Vergleich zur Linie (40) niedrigeren Niveau ein.

Zu dem Zeitpunkt (t₃) verringert sich der Reibwert zwischen den Reifen des Fahrzeuges und der Fahrbahn weiter. Das Antiblockiersystem erkennt dies und senkt das Druckniveau (P₂₇) weiter ab, derart, daß ein Blockieren der Räder weiterhin vermieden wird und der Bremsschlupf in vorgegebenen Grenzen gehalten wird. Infolge des geringeren Reibwerts kann das Fahrzeug nun weniger stark verzögern als in der Phase zwischen den Zeitpunkten (t₂, t₃), was zur Folge hat, daß sich eine geringere Fahrzeugverzögerung (-a) auf dem durch die Linie (42) dargestellten Niveau einstellt. Das verringerte Druckniveau (P₂₇) hat zur Folge, daß auch das Druckniveau (P₂₆) abgesenkt werden kann. Das elektronische Steuergerät (3) erkennt dies und senkt daraufhin das Druckniveau (P₂₆) zunächst mit einem vorgegebenen Gradienten gemäß der Linie (51) auf ein in der Fig. 2a durch die Linie (33) dargestelltes Niveau ab. Hierdurch wird das Druckniveau (P₂₆) an den wirklichen Druckbedarf zur ABS-Regelung des Bremsdrucks (P₂₇) angepaßt.

Gemäß einer vorteilhaften Ausgestaltung der Erfindung kann das elektronische Steuergerät (3) als Kriterium für die Erkennung und Absenkung des Druckniveaus (P₂₆) eines oder beide der folgenden Kriterien verwenden:
1. Reibwert zwischen Reifen und Fahrbahn,
2. Fahrzeugverzögerung (-a).

In einer vorteilhaften Weiterbildung der Erfindung prüft das elektronische Steuergerät (3) die Veränderung wenigstens eines der zuvor genannten Kriterien und verringert den Eingangsdruck (P₂₆), wenn eine der Größen Reibwert oder Fahrzeugverzögerung geringer wird bzw. eine sinkende Tendenz aufweist.

Gemäß einer vorteilhaften Weiterbildung der Erfindung überprüft das elektronische Steuergerät (3) bei jeder Ansenkung des Eingangsdrucks (P₂₆), ob der Eingangsdruck (P₂₆) einen ersten Mindestdruckwert (Pₘᵢₙ₁) unterschreitet. Das elektronische Steuergerät (3) senkt dabei den Eingangsdruck (P₂₆) nicht unter den Mindestdruckwert (Pₘᵢₙ₁) ab. Des Weiteren prüft das elektronische Steuergerät (3), ob eine sogenannte µ-split-Bedingung vorliegt, d. h. ob die Reibwerte zwischen den Reifen und der Fahrbahn zwischen der linken und der rechten Fahrzeugseite unterschiedlich sind. In einem solchen Fall prüft das elektronische Steuergerät (3) zusätzlich, ob der Eingangsdruck (P₂₆) einen zweiten Mindestdruckwert (Pₘᵢₙ₂), welcher größer ist als der erste Mindestdruckwert (Pₘᵢₙ₁), unterschreitet. Das elektronische Steuergerät (3) senkt den Eingangsdruck (P₂₆) beim Vorliegen der µ-split-Bedingung nicht unter den zweiten Mindestdruckwert (Pₘᵢₙ₂) ab. Der Verwendung des ersten und des zweiten Mindestdruckwertes (Pₘᵢₙ₁, Pₘᵢₙ₂) hat den Vorteil, daß ein aus Sicherheitsgründen erforderlicher Mindestdruck zur Einsteuerung in die Bremszylinder ständig zur Verfügung steht und nicht unterschritten werden kann.

Zu einem Zeitpunkt (t₄) steigt der Reibwert wiederum an. Das Antiblockiersystem erhöht infolgedessen den Bremsdruck (P₂₇), da aufgrund der Reibwertbedingungen eine größere Bremswirkung ohne Radblockieren erzielbar ist. Entsprechend erhöht sich ab dem Zeitpunkt (t₄) auch die Verzögerung (-a) des Fahrzeuges auf das durch die Linie (43) dargestellte Niveau. Gemäß einer vorteilhaften Weiterbildung der Erfindung erkennt das elektronische Steuergerät (3) anhand der bereits erläuterten Kriterien Reibwert und Verzögerung, daß ein grö-ßerer Bedarf an Eingangsdruck (P₂₆) besteht. Das elektronische Steuergerät (3) erhöht den Eingangsdruck (P₂₆) entsprechend, wenn es feststellt, daß beispielsweise die Verzögerung (-a) des Fahrzeuges angestiegen ist oder eine steigende Tendenz aufweist. Das elektronische Steuergerät (3) nimmt die Erhöhung des Eingangsdrucks (P₂₆) gemäß einem durch die Linie (37) dargestellten Gradienten vor, bis ein gewünschtes Druckniveau (39) erreicht ist. Hierbei kann es vorkommen, z. B. wenn der Reibwert kurzfristig von einem geringen auf einen relativ hohen Wert ansteigt, daß ein Bedarf an höherem Eingangsdruck relativ kurzfristig entsteht und entsprechend kurzfristig befriedigt werden muß. Gemäß einer vorteilhaften Weiterbildung der Erfindung überwacht das elektronische Steuergerät (3) zusätzlich die Druckeinsteuerphasen der ABS-Regelung. Wenn dabei festgestellt wird, daß im Rahmen der ABS-Regelung eine oder mehrere Druckeinsteuerphasen eingestellt werden, deren Gesamtdauer einen vorbestimmten Wert (Tₘₐₓ) überschreitet, was in der Fig. 2a zu einem Zeitpunkt (35) der Fall ist, so erhöht das elektronische Steuergerät (3) den Eingangsdruck (P₂₆) mit einem größeren Gradienten, welcher in der Fig. 2a durch die Linie (36) dargestellt ist. Hierdurch erreicht der Eingangsdruck (P₂₆) relativ schnell das in der Fig. 2a durch die Linie (39) dargestellte Niveau. Der gestrichelte Teil der Linie (37) zeigt an, in welcher Weise dieses Druckniveau (39) ohne Überwachung der Druckeinsteuerphasen erreicht worden wäre.

Zu dem Zeitpunkt (t₅) endet die ABS-Regelung, z. B. weil das Fahrzeug einen Fahrbahnabschnitt erreicht hat, auf dem ein Blockieren der Räder bei der vom Fahrer angeforderten Bremswirkung nicht mehr auftritt. Das elektronische Steuergerät (3) erhöht infolgedessen die Druckniveaus (P₂₆, P₂₇) gemäß der Linie (38) auf das von dem Fahrer angeforderte Druckniveau (P_{BWS}). Hierdurch steigt die Fahrzeugverzögerung auf das durch die Linie (44) dargestellte Niveau an.

## Patentansprüche

1. Verfahren zur Steuerung des Eingangsdrucks (P₂₆) eines ABS-Regelventils (13, 14) bei einer Druckmittelbremsanlage für ein Fahrzeug, die wenigstens ein Antiblockiersystem (ABS) enthält, wobei das Antiblockiersystem wenigstens eine Steuereinheit (3) zum Ausführen einer ABS-Regelung aufweist, welche bei einer ABS-Regelung Drucksteuersignale an das ABS-Regelventil (13, 14) zwecks Druckanpassung des Ausgangsdrucks (P₂₇) des ABS-Regelventils (13, 14) sendet, und wobei das ABS-Regelventil (13, 14) die Funktionen "Druck halten", "Druck abbauen" und "Druck erhöhen" aufweist, **dadurch gekennzeichnet, daß** der Eingangsdruck (P₂₆) bei einer ABS-Regelung auf kleinere Druckwerte als von dem Fahrer durch Bremspedalbetätigung angeforderte Soll-Bremsdruckwerte (P_{BWS}) eingestellt wird, wobei der Eingangsdruck (P₂₆) während des Abbremsvorgangs verändert wird.

2. Verfahren nach Anspruch 1, **dadurch gekennzeichnet, daß** der Eingangsdruck (P₂₆) bei einer ABS-Regelung in Abhängigkeit von während des Abbremsvorgangs ermittelten Größen einstellbar ist.

3. Verfahren nach wenigstens einem der vorhergehenden Ansprüche, **dadurch gekennzeichnet, daß** der Eingangsdruck (P₂₆) in Abhängigkeit von Fahrzeugkenngrößen einstellbar ist.

4. Verfahren nach wenigstens einem der vorhergehenden Ansprüche, **dadurch gekennzeichnet, daß** während der ABS-Regelung der Eingangsdruck (P₂₆) erhöht wird, wenn die Verzögerung (-a) des Fahrzeuges eine steigende Tendenz aufweist.

5. Verfahren nach wenigstens einem der vorhergehenden Ansprüche, **dadurch gekennzeichnet, daß** während der ABS-Regelung der Eingangsdruck (P₂₆) verringert wird, wenn die Verzögerung (-a) des Fahrzeuges eine sinkende Tendenz aufweist.

6. Verfahren nach wenigstens einem der vorhergehenden Ansprüche, **dadurch gekennzeichnet, daß** der Eingangsdruck (P₂₆) nach Maßgabe eines ermittelten Reibwertes (µ) zwischen den Reifen und der Fahrbahn variierbar ist.

7. Verfahren nach wenigstens einem der vorhergehenden Ansprüche, **dadurch gekennzeichnet, daß** für die Bestimmung des Eingangsdrucks (P₂₆) der in einem ausgangsseitig des ABS-Regelventils (13, 14) angeschlossenen Bremszylinder (15, 16) vorliegende Bremsdruck (P₂₇) zu dem Zeitpunkt verwendet wird, zu dem eine ABS-Regelung begonnen wird.

8. Verfahren nach Anspruch 7, **dadurch gekennzeichnet, daß** der Eingangsdruck (P₂₆) auf ein Druckniveau (50) oberhalb des in dem Bremszylinder (15, 16) vorliegenden Bremsdrucks (P₂₇) festgelegt wird.

9. Verfahren nach wenigstens einem der vorhergehenden Ansprüche, **dadurch gekennzeichnet, daß** der Eingangsdruck (P₂₆) erhöht wird, wenn im Rahmen der ABS-Regelung eine oder mehrere Druckeinsteuerphasen eingestellt werden, deren Gesamtdauer einen vorbestimmten Wert (Tₘₐₓ) überschreitet.

10. Verfahren nach wenigstens einem der vorhergehenden Ansprüche, **dadurch gekennzeichnet, daß** der Eingangsdruck (P₂₆) auf einen ersten Mindestdruckwert (Pₘᵢₙ₁) begrenzt wird, unterhalb dessen der Eingangsdruck (P₂₆) nicht abgesenkt wird.

11. Verfahren nach Anspruch 10, **dadurch gekennzeichnet, daß** der Eingangsdruck (P₂₆) auf einen zweiten Mindestdruckwert (Pₘᵢₙ₂) begrenzt wird, unterhalb dessen der Eingangsdruck (P₂₆) nicht abgesenkt wird, wenn die Reibwerte zwischen den Reifen und der Fahrbahn zwischen der linken und der rechten Fahrzeugseite unterschiedlich sind (µ-split), wobei der zweite Mindestdruckwert (Pₘᵢₙ₂) größer ist als der erste Mindestdruckwert (Pₘᵢₙ₁).

## Claims

1. Method of controlling the input pressure (P₂₆) of an ABS regulating valve (13, 14) in a pressure-medium-operated braking system for a vehicle having at least one anti-lock braking system (ABS), the anti-lock braking system having at least one control unit (3) for performing an ABS regulation, which unit, in the event of an ABS regulation, sends pressure control signals to the ABS regulating valve (13, 14) for the purpose of pressure adjustment of the output pressure (P₂₇) of the ABS regulating valve (13, 14), and the ABS regulating valve (13, 14) having the functions "maintain pressure", "reduce pressure" and "increase pressure", **characterized in that** the input pressure (P₂₆), in the event of an ABS regulation, is set to lower pressure values than desired braking pressure values (P_{BWS}) requested by the driver by operation of the brake pedal, the input pressure (P₂₆) being changed during the braking operation.

2. Method according to claim 1, **characterized in that** the input pressure (P₂₆), in the event of an ABS regulation, can be set in dependence upon variables determined during the braking operation.

3. Method according to at least one of the preceding claims, **characterized in that** the input pressure (P₂₆) can be set in dependence upon vehicle characteristics.

4. Method according to at least one of the preceding claims, **characterized in that** during the ABS regulation the input pressure (P₂₆) is increased when the deceleration (-a) of the vehicle exhibits a rising trend.

5. Method according to at least one of the preceding claims, **characterized in that** during the ABS regulation the input pressure (P₂₆) is reduced when the deceleration (-a) of the vehicle exhibits a falling trend.

6. Method according to at least one of the preceding claims, **characterized in that** the input pressure (P₂₆) is variable in accordance with a determined coefficient of friction (µ) between the tyres and the roadway.

7. Method according to at least one of the preceding claims, **characterized in that** for determining the input pressure (P₂₆) there is used the braking pressure (P₂₇) present in a brake cylinder (15, 16) connected at the output side of the ABS regulating valve (13, 14) at the instant at which an ABS regulation is begun.

8. Method according to claim 7, **characterized in that** the input pressure (P₂₆) is fixed to a pressure level (50) above the braking pressure (P₂₇) present in the brake cylinder (15, 16).

9. Method according to at least one of the preceding claims, **characterized in that** the input pressure (P₂₆) is increased when, in the context of the ABS regulation, one or more pressure application phases are implemented the total duration of which exceeds a predetermined value (Tₘₐₓ).

10. Method according to at least one of the preceding claims, **characterized in that** the input pressure (P₂₆) is limited by a first minimum pressure value (Pₘᵢₙ₁), below which the input pressure (P₂₆) is not lowered.

11. Method according to claim 10, **characterized in that** the input pressure (P₂₆) is limited by a second minimum pressure value (Pₘᵢₙ₂), below which the input pressure (P₂₆) is not lowered, when the coefficients of friction between the tyres and the roadway are different between the left-hand and right-hand sides of the vehicle (µ split), the second minimum pressure value (Pₘᵢₙ₂) being greater than the first minimum pressure value (Pₘᵢₙ₁).

## Revendications

1. Procédé de commande de la pression d'entrée (P₂₆) d'une valve de régulation ABS (13, 14) dans une installation de freinage à fluide de pression, qui renferme au moins un système antiblocage (ABS), le système antiblocage comprenant au moins une unité de commande (3) pour l'exécution d'une commande ABS, et qui dans le cas d'une régulation ABS envoie des signaux de commande de pression à la valve de régulation ABS (13, 14) à des fins d'adaptation de pression de la pression de sortie (P₂₇) de la valve de régulation ABS (13, 14), et la valve de régulation ABS (13, 14) présentant les fonctions "maintenir la pression", "réduire la pression" et "augmenter la pression",
**caractérisé en ce que** la pression d'entrée (P₂₆), lors d'une régulation ABS, est réglée à des valeurs de pression plus faibles que des valeurs de pression de freinage de consigne (P_{BWS}) demandées par le conducteur par actionnement de la pédale de frein, la pression d'entrée (P₂₆) étant modifiée pendant la phase de freinage.

2. Procédé selon la revendication 1, **caractérisé en ce que** la pression d'entrée (P₂₆) peut, lors d'une régulation ABS, être réglée en fonction de grandeurs déterminées pendant la phase de freinage.

3. Procédé selon l'une au moins des revendications précédentes, **caractérisé en ce que** la pression d'entrée (P₂₆) peut être réglée en fonction de grandeurs caractéristiques du véhicule.

4. Procédé selon l'une au moins des revendications précédentes, **caractérisé en ce que** pendant la régulation ABS, la pression d'entrée (P₂₆) est augmentée lorsque la décélération (-a) du véhicule présente une tendance à croître.

5. Procédé selon l'une au moins des revendications précédentes, **caractérisé en ce que** pendant la régulation ABS, la pression d'entrée (P₂₆) est diminuée lorsque la décélération (-a) du véhicule présente une tendance à chuter.

6. Procédé selon l'une au moins des revendications précédentes, **caractérisé en ce qu'**il est possible de faire varier la pression d'entrée (P₂₆) en fonction de la valeur d'un coefficient de friction ou d'adhérence (µ) entre les pneumatiques et la chaussée ayant été déterminé.

7. Procédé selon l'une au moins des revendications précédentes, **caractérisé en ce que** pour la détermination de la pression d'entrée (P₂₆), on utilise la pression de freinage (P₂₇) présente dans un cylindre de frein (15, 16) raccordé au côté sortie de la valve de régulation ABS (13, 14), à l'instant où débute une régulation ABS.

8. Procédé selon la revendication 7, **caractérisé en ce que** la pression d'entrée (P₂₆) est fixée à un niveau de pression (50) au-dessus de la pression de freinage (P₂₇) présente dans le cylindre de frein (15, 16).

9. Procédé selon l'une au moins des revendications précédentes, **caractérisé en ce que** la pression d'entrée (P₂₆) est augmentée lorsque dans le cadre de la régulation ABS sont réglées une ou plusieurs phases de fourniture de pression dont la durée totale dépasse une valeur prédéterminée (Tₘₐₓ).

10. Procédé selon l'une au moins des revendications précédentes, **caractérisé en ce que** la pression d'entrée (P₂₆) est limitée à une première valeur de pression minimale (Pₘᵢₙ₁) en-dessous de laquelle la pression d'entrée (P₂₆) n'est pas abaissée.

11. Procédé selon la revendication 10, **caractérisé en ce que** la pression d'entrée (P₂₆) est limitée à une deuxième valeur de pression minimale (Pₘᵢₙ₂) en-dessous de laquelle la pression d'entrée (P₂₆) n'est pas abaissée, lorsque les coefficients de friction ou d'adhérence entre les pneumatiques et la chaussée entre le côté gauche et le côté droit du véhicule sont différents (µ-split), la deuxième valeur de pression minimale (Pₘᵢₙ₂) étant supérieure à la première valeur de pression minimale (Pₘᵢₙ₁) .
